# EUROPÄISCHE PATENTSCHRIFT

(11) **EP 2 181 309 B1**
(45) Veröffentlichungstag und Bekanntmachung des Hinweises auf die Patenterteilung: **09.10.2019**
(21) Anmeldenummer: 08801139.0
(22) Anmeldetag: 07.08.2008
(51) Int. Cl.: G01D 5/14

(54) **ABSOLUTER FEINAUFLÖSENDER SEGMENT- ODER UMDREHUNGSZÄHLER**
ABSOLUTE HIGH RESOLUTION SEGMENT OR REVOLUTION COUNTER
COMPTEUR ABSOLU DE SEGMENTS OU DE TOURS À RÉSOLUTION FINE

(30) Priorität: 17.08.2007 DE 102007039051
(43) Veröffentlichungstag der Anmeldung: 05.05.2010
(73) Patentinhaber: AVAGO TECHNOLOGIES INTERNATIONAL SALES PTE. LIMITED, Singapur 768923 (SG)
(72) Erfinder: Mehnert, Walter, 85521 Ottobrunn (DE); Theil, Walter, 85258 Weichs (DE)
(74) Vertreter: Dilg, Haeusler, Schindelmann Patentanwaltsgesellschaft mbH
(86) Internationale Anmeldenummer: PCT/DE2008/001306
(87) Internationale Veröffentlichungsnummer: WO 2009/024120

(56) Entgegenhaltungen:
- EP-A- 1 607 720
- WO-A-2004/046735
- DE-A1- 19 722 016
- FR-A- 2 861 459
- US-A- 5 148 106

## Beschreibung

Die Erfindung betrifft einen absoluten feinauflösenden Linearsegment- oder Umdrehungszähler gemäß dem Patentanspruch 1, der in beiden Richtungen zählt und mindestens einen sich bewegenden Erregermagneten aufweist.

Ein absoluter Linearsegment- oder Umdrehungszähler gewinnt seine Zählinformation, die er dauerhaft abspeichert, ohne Hilfe externer elektrischer Energie.
Die zum Zählen und Abspeichern benötigte elektrische Energie generiert er aus der kinetischen Energie des Antriebes, und das unter allen Bedingungen, also auch bei Geschwindigkeiten gegen Null. Die Anzahl der zu erfassenden und abzuspeichernden Umdrehungen ist dabei in physikalischer Hinsicht unbegrenzt. Seine feinauflösende Funktion übt er absolut aus, d. h. seine momentane Position steht ihm nach Energieunterbrechung und Wiedereinschaltung unverzögert zur Verfügung.

Feinauflösende Zähler innerhalb bis zu einer Umdrehung bezeichnet man im allgemeinen Sprachgebrauch als Singleturn, die Kombination aus Feinauflösung bis zu einer Umdrehung mit der Zählung von mehreren Umdrehungen als Multiturn. Es handelt sich im vorliegenden Fall also um ein Multiturn.

Ferromagnetische Elemente für das Erfassen von translatorischen und/oder rotatorischen Bewegungen sind, wie in der US 4,364,013 dargestellt, als sogenannte Impulsdraht-Bewegungsmelder oder wie in der DE 4 107 847 C1 oder der DE 2 817 169 C2 dargestellt, als Wiegand-Sensoren bekannt, bei denen ein vorbehandelter Draht aus ferromagnetischem Material von einer Sensorspule umwickelt ist. Die im ferromagnetischen Material zunächst unregelmäßig orientierten magnetischen Bereiche - als magnetische Domänen oder auch als Weißsche Bereiche bezeichnet - richten sich unter dem Einfluss äußerer mechanischer und/oder Magnetkräfte zu einer einzigen Domäne aus. Beim Anlegen eines äußeren Magnetfeldes von bestimmter Richtung und Größe "klappt" diese Domäne "schlagartig" um, was zu einem als Ausgangssignal abnehmbaren Spannungsimpuls in der Sensorspule führt.

In ferromagnetischen Materialien ist die Wechselwirkung der magnetischen Momente benachbarter Atome mit unterschiedlicher Magnetisierungsrichtung sehr stark, was zur Ausrichtung der Momente in kleinen Raumbereichen führt. Die bereits erwähnten magnetischen Domänen, Weißsche Bezirke oder -Bereiche, sind durch als Blochwände bezeichnete Übergangsschichten voneinander getrennt. Durch den Einfluss äußerer Kräfte kann - wie vorstehend ausgeführt - erreicht werden, dass sich die erwähnte einzige Domäne, das ferromagnetische Element, ausbildet. Wird eine solche Domäne in ein äußeres magnetisches Feld bestimmter Größe und Richtung gebracht, dann klappen die Elementarmagnete von einer Ausgangsposition - vorzugsweise ein Drahtende - aus dominoartig in Richtung des äußeren Feldes um, was zu einer Umklappwelle endlicher Geschwindigkeit in dem ferromagnetischen Element führt, die aber groß gegenüber der Geschwindigkeit des erregenden Magneten ist, so dass von einem "schlagartigem Umklappen" dieser Domäne gesprochen werden darf.

Der vorstehend genannte Effekt der über das ferromagnetische Element laufenden Blochwand wird nach der DE 102 59 223 zur Ermittlung der Polarität und der Position des Erregermagneten benutzt, indem durch ein zusätzliche Sensorelement die Auslöserichtung der von beiden Stirnseiten aus initiierbaren Ummagnetisierung des ferromagnetischen Elementes, also die Ausrichtung der Ummagnetisierung des ferromagnetischen Elements bestimmt wird.

Im allgemeinen Fall, der gekennzeichnet ist durch einen Erregermagneten und der Auflösung von einer halben Umdrehung, ist ein Umdrehungszählersystem durch die vier bekannten Erregermagnetzustände in Verbindung mit seiner letzten abgespeicherten Position vollständig beschrieben.

Zwar ist durch diese Maßnahme ein Positionsdetektor mit denkbar einfachem mechanischen Aufbau realisierbar, der auch bei Geschwindigkeiten gegen Null und Ausfall der regulären Stromversorgung mit nur einem ferromagnetischen Element in beiden Bewegungsrichtungen des Erregermagneten einwandfrei arbeitet, wobei dabei beachtenswert ist, dass die Informationen über die Auslöserichtung der Ummagnetisierung des ferromagnetischen Elementes durch den auslösenden Pol des Erregermagneten und dessen Polarität zum gleichen Zeitpunkt Ts verfügbar sind. Diese optimal vereinfachte Gestaltung eines Positionsdetektors ermöglicht es auch, aus den Ausgangssignalen der Sensorspule gleichzeitig die Energie für die eine Zählvorrichtung umfassende Auswerteelektronik zu erhalten.

Die EP 1 607 720 A2 betrifft einen Lenkwinkelsensor zur Bestimmung des absoluten Lenkwinkels eines Fahrzeugs, mit einem mit einer Lenkwelle oder einem Lenkrad drehgekoppelten Rotor, mit einer Abtasteinheit zur Abtastung einer rotorseitigen Winkelcodierung zur Bestimmung eines relativen Drehwinkels, insbesondere innerhalb einer vollen Umdrehung oder innerhalb eines Winkelabschnitts einer vollen Umdrehung, und mit einer Zähleinheit zur Abtastung einer Inkrementcodierung. Die Inkrementcodierung kann dabei am Rotor oder an einem mit dem Rotor und/oder der Lenkwelle und/oder dem Lenkrad drehgekoppelten Drehkörper angeordnet sein. Über die Abtastung der Winkelcodierung, aus der der relative Drehwinkel innerhalb einer Umdrehung oder eines Abschnitts davon bestimmbar ist und aus der Abtastung der Inkrementcodierung, mit der die Anzahl von Inkrementschritten und damit die Drehlage des Rotors, des gegebenenfalls vorzusehenden Drehkörpers und/oder der Lenkwelle, beziehungsweise des Lenkrades, grob erfassbar ist, kann der absolute Lenkwinkel über mehrere Umdrehungen des Lenkrades eindeutig bestimmt werden.

Trotz des grundsätzlich möglichen und denkbar einfachen mechanischen Aufbaus solcher Detektoren hat die Erfahrung gezeigt, dass zukünftigen Anwendungsgebiete eine extreme Miniaturisierung ihrer Bauelemente und damit des Systems bei gleichzeitiger drastischer Kostensenkung erfordert ohne dabei die Vorteile der von Fremdenergie unabhängigen langlebigen Ausbildung aufzugeben.

Die vorteilhafte Weiterbildung solcher Multiturnsensoren als feinauflösender Linearsegment- oder Umdrehungszähler bis zur Einchiplösung ist daher Aufgabe der Erfindung.

Diese Aufgabe ist durch die Merkmale des Patentanspruchs 1 gelöst.

Weitere Merkmale der Erfindung ergeben sich aus den Unteransprüchen.

In diesem Zusammenhang ist die Betrachtung der heute verwendeten Technologien bedeutend.

Es existieren Multiturns aus:
1. optischen Singleturns mit optisch/mechanischem Getriebe
2. optichen Singelturns mit magnetisch/mechanischem Getriebe
3. magnetische Singleturns mit optisch/mechanischem Getriebe
4. magnetische Singleturns mit magnetisch/mechanischen Getriebe

Ebenso sind kapazitive Singleturns kombiniert mit den entsprechenden Getriebelösungen bekannt.

Obwohl Getriebe keine absolute Drehzahlerfassung garantieren, weil aufgrund der möglichen Baugröße und der tragbaren Kosten nur eine eng begrenzte Anzahl von Umdrehungen erfasst werden kann und diese auch nur stark eingeschränkte Geschwindigkeiten und Beschleunigungen überstehen, sollten sie dennoch zu einer vergleichenden Abschätzung herangezogen werden, um den Erfindungsgedanken herauszuarbeiten.

Batteriebetriebene Multiturns sind keine absoluten Multiturns, weil diese eine fremde elektrische Energiequelle besitzen, die dazu in vielerlei Hinsicht technisch unsicher ist.

Der in der vorliegenden Patentanmeldung vorgestellte absolute Multiturn wird nicht durch die Anwendungstechnologie begrenzt, sondern durch die Physik.

Hier sind mehrere 10⁵ U/min möglich. Die Anzahl der zuerfassenden und abzuspeichernden Umdrehungen ist praktisch unbeschränkt. Magnetische Singleturns erreichen heute die gleiche Auflösung wie optische.

Trotz dominanter technischer Vorzüge hat es eine neue Technologie immer schwer, einen aufgeteilten Markt zu erobern. Dies ist nur über die Kosten zu erreichen. Mit einer Einchiplösung - als Endziel - für einen absoluten Multiturn kann eine Etablierung auf dem Markt gelingen.

Aber bereits technisch wirtschaftlich günstige Zwischenlösungen brechen den Markt auf. Hier muss hervorgehoben werden, dass eine solche Einchiplösung nur dann einfach und kostengünstig realisierbar ist, wenn die zu integrierenden Elemente die gleiche Basis - bevorzugt eine magnetische - besitzen. Bei den oben angesprochenen Varianten ist aus mechanischen oder energetischen Gründen eine solche Einchiplösung nur schwer - wenn
überhaupt - realisierbar.

Die sukzessive Integration der einzelnen Elemente, die teils schon in IC-Form, teils noch direkt vorliegen, über vorteilhafte Zwischenlösungen zum Endziel Einchiplösung unter Berücksichtigung markanter Randbedingungen, wie in den Unteransprüchen niedergelegt, ist die Grundlage und Aufgabe der Erfindung.

Die optimale Realisierung über Zwischenlösungen zum Endchip als magnetischem Multiturn wird daher in den Beispielen und Zeichnungen offenbart:
Gemäß einer Ausführungsform umfasst ein absoluter feinauflösender Linearsegment- oder Umdrehungszähler ein einziges ferromagnetisches Element mit mindestens einer dieses Element umgebenden Spule als Wiegand-Element, mindestens ein zusätzliches Sensorelement für die Ermittlung von Informationen zur Zählung der Segmente oder Umdrehungen in beiden Richtungen, einen magnetischen Zusatzsensor zur Feinauflösung der Segmente oder einer Umdrehung, mindestens einen gemeinsamen Erregermagneten für Segment-/Umdrehungszähler und Zusatzsensor, eine Steuerlogik und Energieverwaltung für den Segment-/Umdrehungszähler, eine Logik für die Multiturnanwendung bzw. µ-Controller für die Feinauflösung und eine nicht flüchtige Zähl- und Speichereinheit zur dauerhaften Abspeicherung der Zählinformationen.

In Folge einer Anordnung des Wiegand-Elements direkt im magnetischen Hauptfeld zwischen zwei Erregermagneten, deren magnetischer Rückschluss über einen gemeinsamen, vorzugsweise als geschlossener Ring, ausgebildeten ferromagnetischen Rückschlusskörper gebildet ist, wird ein in geometrischer und magnetischer Hinsicht symmetrisch ausgebildeter Umdrehungszähler geschaffen, der, weil gegenüber äußeren Einflüssen weitgehend abgeschirmt ist, kleinste Dimensionen erreicht und damit auch die Erfassung höchster Drehzahlen ermöglicht.

Ein Energiespeicher ist nur dann notwendig, wenn die Reaktionszeit des zusätzliches Sensorelements größer ist als die Dauer des Spannungsimpulses aus der Spule über dem ferromagnetische Element. Dies ist z. b. bei den heutigen Hallsonden der Fall, aber nicht bei Benutzung von Feldplatten.

Vorzugsweise ist der Energiespeicher dann als ein Kondensator ausgebildet. Das ferromagnetische Element ist aus heutiger Sicht wirtschaftlich immer ein Impuls- oder Wiegand-Draht.

In vorteilhafter Weise ist über die Spule sowohl die Polarität des Erregermagneten feststellbar als auch die Energieversorgung für die Zähl- und Speichereinheit, das zusätzliche Sensorelement und eine Steuereinheit mit Energieverwaltung gewährleistet.

Um den Zustand des ferromagnetischen Elements festzustellen, wird die Spule vorteilsweise beim Einschalten externer Spannung zur Synchronisierung mit dem Zusatzsensor vorteilhafterweise rampenförmig bestromt.

Vorzugsweise ist das zusätzliche Sensorelement und/oder der Zusatzsensor als eine Feldplatte und/oder Hallsonde ausgebildet.

In vorteilhafte Weise übernimmt der Zusatzsensor die Aufgabe des zusätzlichen Sensorelements, nämlich die Feststellung der Position des Erregermagneten.

Vorzugsweise weist der Zusatzsensor eine interne und eine externe Spannungsversorgung auf.

Vorzugsweise nimmt der Zusatzsensor beim Auftreten interner Spannung, also im stromarmen Betrieb, eine Grobauflösung über mindestens ein halbes Segment oder eine halbe Umdrehung vor und stellt dabei die Polarität des Erregermagneten fest.

Vorzugsweise wird bei einer extern anliegenden Spannung der Zusatzsensor getaktet betrieben. Hierdurch ist gewährleistet, dass der Stromverbrauch unter der kritischen Grenze von 4 m A verbleibt, sodass der feinauflösende Segment- bzw. Umdrehungszähler auch für eigensichere Systeme einsetzbar ist.

Zur Genauigkeitsauflösung werden in vorteilhafte Weise die Analogsignale des Zusatzsensors in einem µ-Controller bzw. der Logik für die Feinauflösung mittels Fourieranalyse fehlerbereinigt.

Vorzugsweise liegt das ferromagnetische Element mit umgebender Spule und der Zusatzsensor im Magnetfeld zwischen zwei Magneten, die einen gemeinsamen magnetischen Rückschluss über einen ferromagnetischen Ring oder eine Sensorhaube besitzen.

Die mindestens zwei Erregermagnete sind dabei vorzugsweise aus kunststoffgebundenem hartmagnetischem Material ausgebildet.

Vorzugsweise ist der nicht flüchtige Speicher als ein Ferroelectric Random Access Memory (FRAM)ausgebildet, der von der Induktionsspule mit interner Spannung und zumindest zeitweise zum Auslesen der Zählinformationen mit externer Spannung versorgbar ist.

Vorzugsweise ist der Kondensator in FRAM-Technologie ausgeführt. Vorzugsweise ist der absolute Multiturn als absoluter magnetischer Multiturn ausgeführt. Als magnetischer Multiturn wird ein Multiturn bezeichnet, dessen aktive Elemente - Wiegand-Element, zusätzliches Sensorelement, Zusatzsensor - auf Magnetfelder reagieren, die übrigen Bauteile auf elektrische Signale bzw. Energie.

Gemäß einer Ausführungsform sind in einem ersten Integrationsschritt das zusätzliche Sensorelement, der Steuerlogik- und Energieverwaltungs-IC und der Zusatzsensor in einem Gesamt-IC als Ziel-ICl zusammengefasst.

Gemäß einer weiteren Ausführungsform ist die Zähleinheit mit nichtflüchtigem Speicher und gegebenenfalls mit einem Speicherkondensator mit dem Ziel-ICl zum Ziel-IC2 auf IC-Ebene zusammengefasst.

Bei einer weiteren Ausführungsform wird das Ziel-IC2 mit dem µ-Controller auf IC-Ebene zum Ziel-IC3 integriert.

In einer letzten Ausführungsform, dem End-IC als Einchiplösung, sind auch das ferromagnetische Element und die Spule mit einbezogen. Die Ziel-ICs können auch als mehrere ICs in nur einem Gehäuse ausgebildet sein.

Es versteht sich von selbst, dass die Kombination der Ic's und der Bauelemente in den einzelnen Integrationsstufen und deren Reihenfolge zu einer Einchiplösung beliebig sein können. Die hier vorgeschlagenen Integrationsstufen und deren Schrittfolge zeigt als ein Ausführungsbeispiel nur die optimale zeitliche Lösung.

Die Erfindung ist nachfolgend an Hand von in der Zeichnung mehr oder minder schematisch dargestellten Ausführungsbeispielen beschrieben. Es zeigen:
- Fig. 1: einen schematischen Aufbau eines absoluten magnetischen feinauflösenden Segment- oder Umdrehungszählers mit ringförmigem Rückschlusskörper;
- Fig. 2: den Segment- oder Umdrehungszähler gemäß Fig. 1 im Querschnitt;
- Fig. 3: einen schematischen Aufbau eines Ausführungsbeispiels eines erfindungsgemäßen absoluten magnetischen feinauflösenden Linearsegment- oder Umdrehungszählers mit ringförmigem Rückschlusskörper nach der letzten Integrationsstufe in der Draufsicht;
- Fig. 4: den Segment- oder Umdrehungszähler gemäß Fig. 3 im Querschnitt;
- Fig. 5: einen schematischen Aufbau eines Ausführungsbeispiels eines absoluten magnetischen feinauflösenden Linearsegment- oder Umdrehungszählers in quasi offener Ausführung;
- Fig. 6: einen schematischen Aufbau eines Ausführungsbeispiels gemäß Fig. 5 im Querschnitt;
- Fig. 7: einen schematischen Aufbau eines Ausführungsbeispiels gemäß Fig. 5 nach der letzten Intergrationsstufe und
- Fig. 8: einen schematischen Aufbau eines Ausführungsbeispiels gemäß Fig. 7 im Querschnitt;
- Fig. 9: eine Blockbilddarstellung der kompletten Elektronik mit ferromagnetischem Element und Spule des absoluten magnetischen Multiturns vor der ersten Integrationsstufe;
- Fig. 10: eine Blockbilddarstellung der kompletten Elektronik mit ferromagnetischem Element und Spule des absoluten magnetischen Multiturns mit dem Ziel-ICl nach der ersten Integrationsstufe;
- Fig. 11: eine Blockbilddarstellung der kompletten Elektronik mit ferromagnetischem Element und Spule des absoluten magnetischen Multiturns mit dem Ziel-IC2 nach der zweiten Integrationsstufe;
- Fig. 12: eine Blockbilddarstellung der kompletten Elektronik mit ferromagnetischem Element und Spule des absoluten magnetischen Multiturns mit dem Ziel-IC3 nach der dritten Integrationsstufe;
- Fig. 13: die Blockbilddarstellung des absoluten magnetischen Multiturns, dessen komplette Elektronik einschließlich ferromagnetischem Element und Spule in der letzten Integrationsstufe zu einem IC zusammengefasst sind;

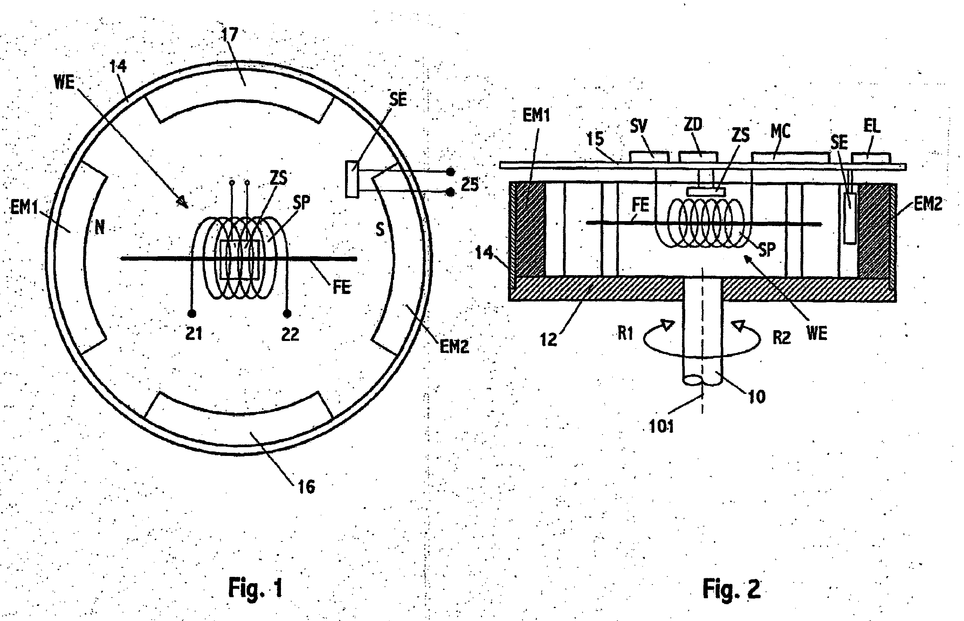

Bei dem in den Figuren 1 und 2 gezeigten Beispiel eines absoluten magnetischen feinauflösenden Umdrehungszählers ist der sich bewegende Körper eine Welle 10, die sich in Richtung der Pfeile R1 und R2, also im Uhrzeiger- oder im Gegenuhrzeigersinn drehen kann. Um die Drehungen der Welle 10 zählen zu können, ist diese mit einem Magnetträger 12 fest verbunden, dem zwei einander gegenüber liegende, kreissektorförmig ausgebildete Erregermagnete EM1 und EM2 zugeordnet sind, die einen Nordpol N und einen Südpol S aufweisen. Die Erregermagnete sind von einem als ferromagnetischen Rückschlusskörper 14 ausgebildeten Ring umfasst, dessen Radius mit dem Radius der kreissektorförmig ausgebildeten Erregermagnete korrespondiert. Zwischen den einander zugewandten Austrittsflächen der Erregermagnete befindet sich in einer Stellung ein Wiegand-Element WE, bestehend aus einem ferromagnetischen Element FE, das von einer Sensorspule SP umschlossen ist. Das Wiegand-Element WE wird von einer Platine 15 derart zwischen den Austrittsflächen der Erregermagnete EM1 und EM2 gehalten, dass sein ferromagnetisches Element FE diesen Austrittsflächen zugewandt ist und damit von dem Erregermagnetfeld axial durchsetzt werden kann.

Zwecks Feststellung der Polarität des Erregermagneten bei der Passage des ferromagnetischen Elementes FE ist als zusätzliches Sensorelement SE eine Hallsonde vorgesehen, die ebenfalls von der Platine 15 gehalten wird und an deren Ausgang 25 je nach Polarität N oder S der Erregermagneten und deren Stellung ein positives, ein negatives oder ein Null-Signal abnehmbar ist.

Zudem ist an der Platine 15 noch ein Zusatzsensor ZS angeordnet, der die Feinauflösung einer Umdrehung übernimmt. Der Zusatzsensor ist ebenfalls im Hauptfeld zwischen den beiden Erregermagneten EM1 und EM2 angeordnet, so dass dieser ebenfalls elektromagnetisch geschirmt ist. Dazu sieht er ein nahezu homogenes Magnetfeld, was erregermagnetisch bedingte Störgrößen stark herabsenkt. Das Messsignal ermöglicht somit höchste Genauigkeiten und Auflösungen. Wiegand-Element und Zusatzsensor ZS sehen auf den gemeinsamen Rückschlusskörper 14, d. h. Rückwirkungen des Wiegand-Elements auf den Zusatzsensor werden auf diese Weise drastisch reduziert. Da letzterer im Hauptfeld zwischen den beiden Erregermagneten liegt, ist er ebenfalls elektromagnetisch geschirmt. Das zusätzliche Sensorelement SE ist im Streufeld angeordnet.

Ein solcher Umdrehungszähler weist beispielsweise einen Drehmesser in 10 - 15 mm auf und kann mit über 10⁵ U/min betrieben werden.

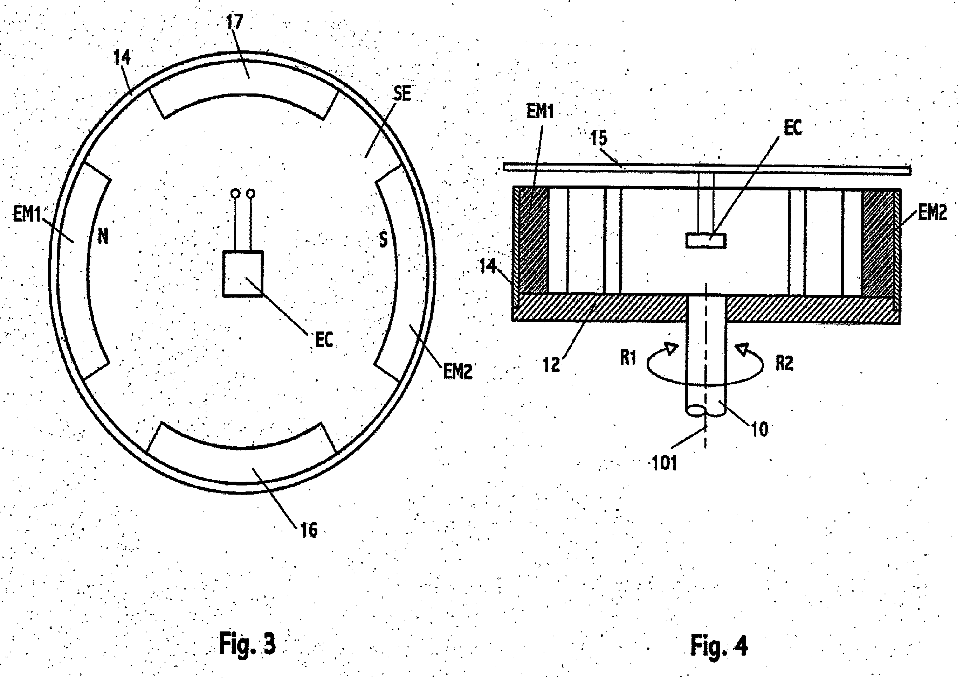

In den Figuren 3 und 4 wird der unter den Figuren 1 und 2 beschriebene absolute magnetische Multiturn nach der letzten Integrationsstufe gezeigt. Hier liegt der End-IC zentral in der Drehachse des ferromagnetischen Rückschlusskörpers 14 im Magnetfeld zwischen den beiden Erregermagneten EM1 und EM2.

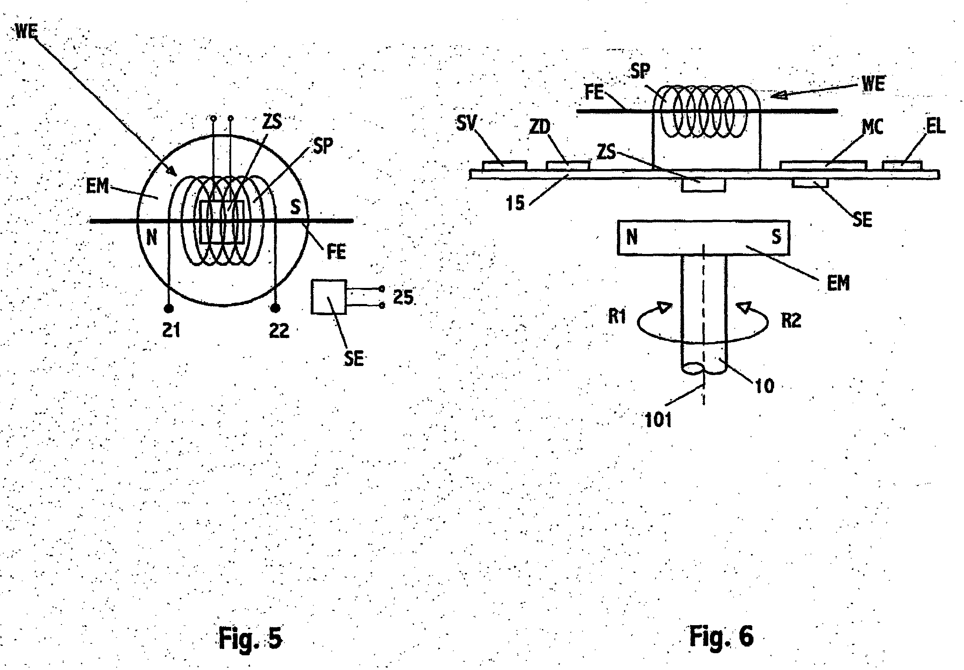

Bei den in den Figuren 5 und 6 gezeigten absoluten magnetischen Multiturns handelt es sich insofern um eine offene Ausführung, weil der magnetische Rückschlusskörper 14 fehlt und sich das ferromagnetische Element FE, das zusätzliche Sensorelement SE und der Zusatzsensor ZS im Streufeld nur eines gemeinsamen Erregermagneten befinden, der als diametral magnetisierter Rundmagnet direkt auf der Antriebswelle 10 sitzt.

Eine solche Ausführungsform wird man immer dann wählen, wenn genügend Platz für den Multiturnsensor zur Verfügung steht und die vorgegebenen Drehzahlen niedrig sind. Die Abschirmung gegen äußere Einflüsse übernimmt hier eine ferromagnetische Abdeckhaube aus Weicheisen größeren Durchmessers.

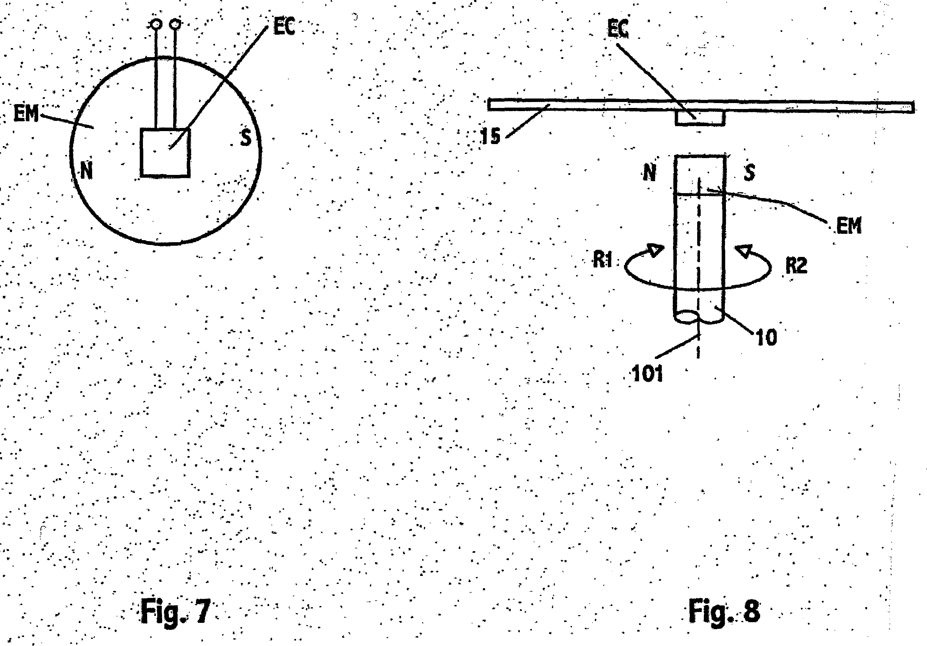

Die Figuren 7 und 8 zeigen den mit den Figuren 5 und 6 beschriebenen Multiturn nach der letzten Integrationsstufe.

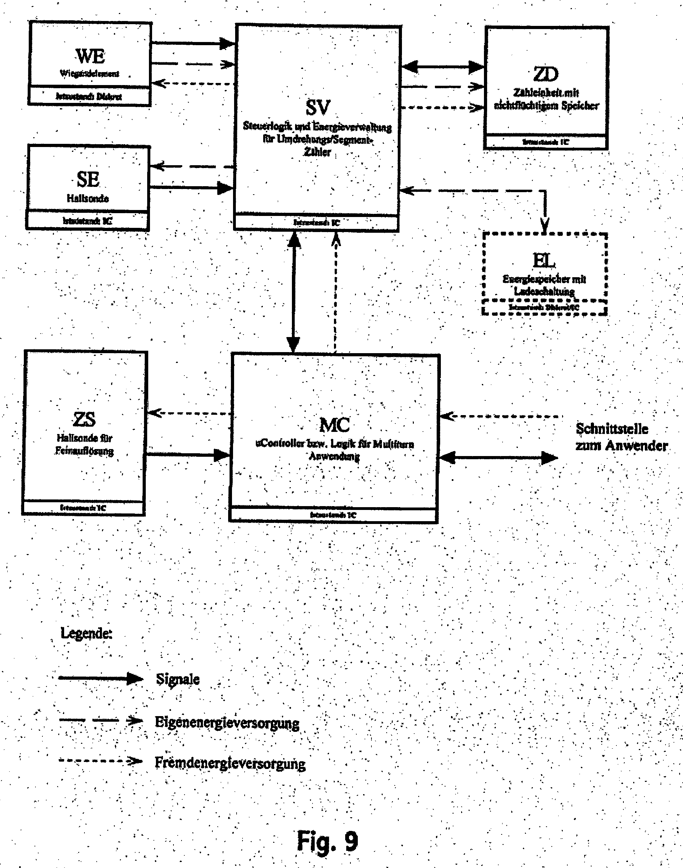

Fig. 9 zeigt den vorliegenden in den Figuren 1 bis 8 beschriebenen absoluten Multiturn in Form einer Blockbilddarstellung in der Ausgangslage, also vor dem ersten Integrationsschnitt. Es wird die komplette Elektronik mit ferromagnetischem Element und Spule offenbart. Wiegand-Element und Kondensator liegen in diskreter Ausführungsform vor, die restlichen Elemente als ICs.

Sowohl in Fig. 9 als auch in den nachfolgenden Blockbilddarstellungen symbolisieren die punktierten Linien/Pfeile den Verlauf der Fremdenergie, die strichlierten Linien/Pfeile den der Eigenenergie und die durchgezogenen Linien/Pfeile den der Signale.

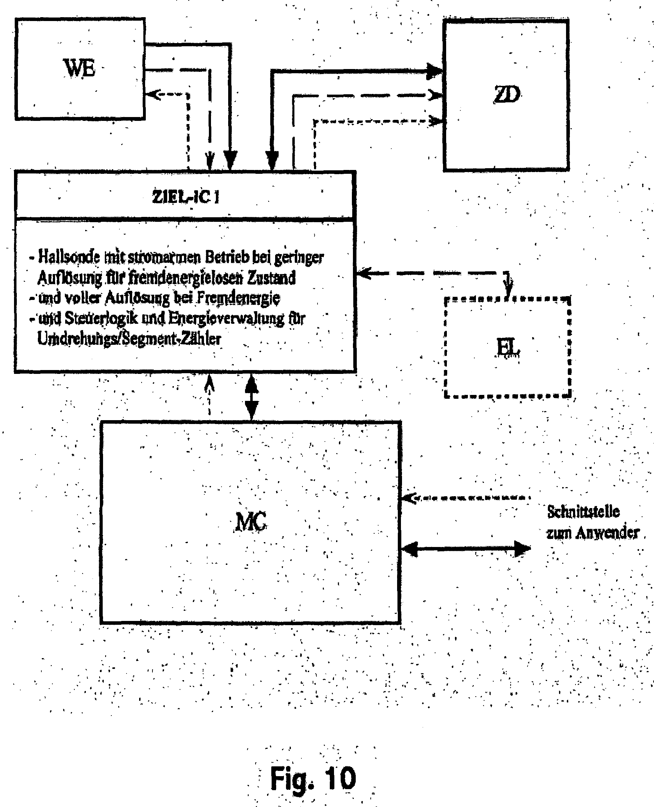

Zur Verringerung der Baugröße und der Kosten ist die gemäß Fig. 10 als Blockschaltbild vorgesehene Ausführungsform vorgesehen. Zusatzsensor, zusätzliches Sensorelement und Elektronik für Steuerung und Energieverwaltung sind in einem ersten Integrationsschritt zum Ziel-ICl zusammengefasst. Dieser enthält eine Hallsonde, die bei stromarmem Eigenbetrieb mit geringer Auflösung arbeitet und zur Polerkennung des/der Erregermagneten dient. Die volle Auflösung erreicht diese bei Versorgung mit Fremdenergie, wobei sie vorteilhafterweise aus Energiegründen getaktet ist.

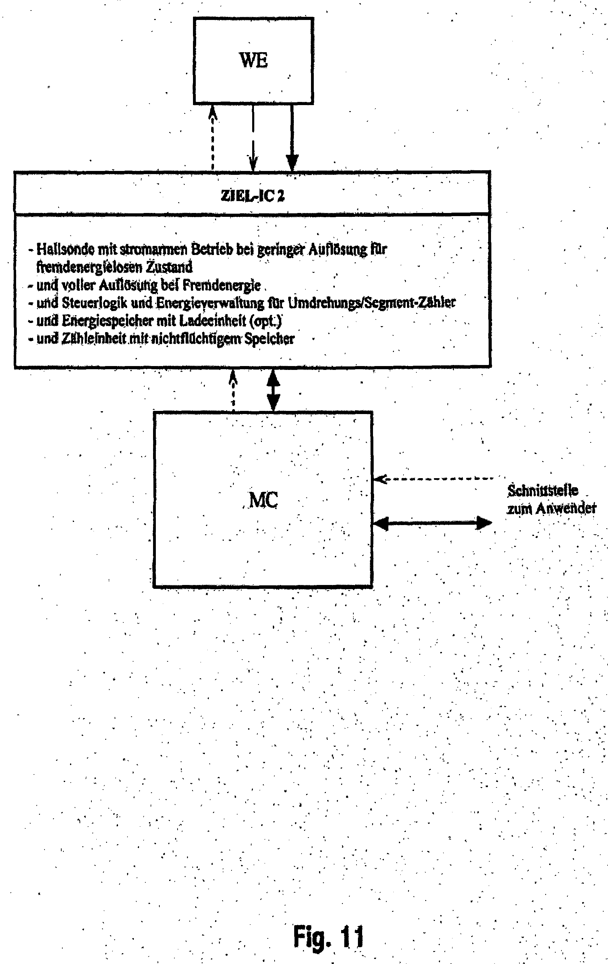

Einen weiteren Schritt in die unter Fig. 10 vorbeschriebene Richtung ist mit dem zweiten Integrationsschritt in der Fig. 11 dargestellt. Gemäß dieser Ausführungsform ist auch die Zähleinheit mit nichtflüchtigem Speicher und der gegebenenfalls mindestens eine Kondensator in den Ziel-ICl zum Ziel-IC2 auf IC-Ebene zusammengefasst. Dieser Schritt ist sinnvoll, weil hier eine neu zu integrierende Technologie, die der FRAMs, auftaucht. Da Kondensatoren im nF-Bereich benötigt werden, ist nur ein IC-Kondensator in FRAM-Technologie wirtschaftlich.

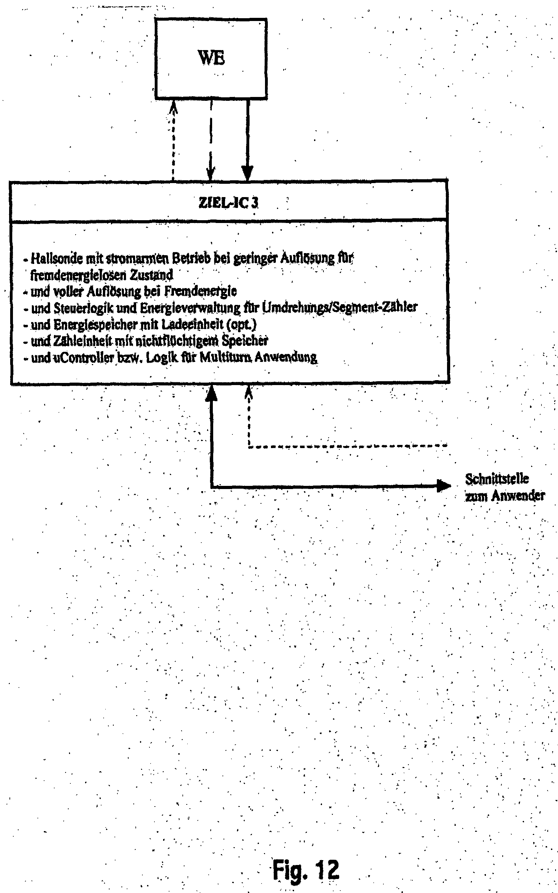

In der Ausfertigungsform gemäß Fig. 12 werden der Ziel-IC2 mit z. B. einem µ-Controller zu einem Ziel-IC3 zusammengefasst. Durch diesen dritten Integrationsschritt wird nicht nur erreicht, dass die für die Funktion wichtige Elektronik kostengünstig zusammengefasst ist, sondern auch eine Verbesserung der Funktion und Abschirmung erhalten. Gleichzeitig ist die Grenze des heute leicht Machbaren erreicht.

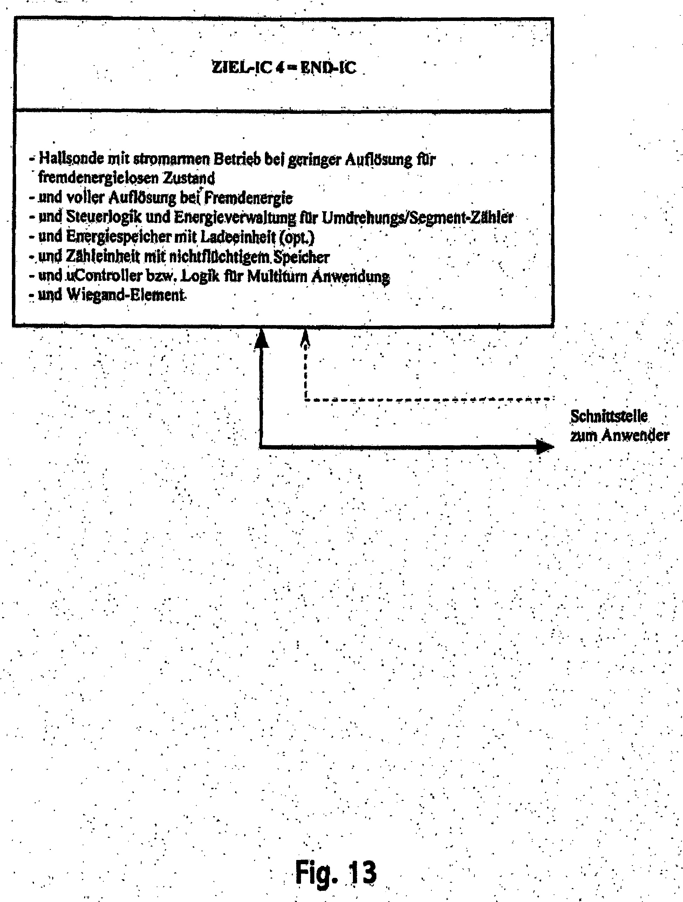

Durch den letzten Integrationsschritt, wie in der Blockdarstellung gemäß Fig. 13 festgehalten, wird eine Einchiplösung für den absoluten Multiturn als Endziel zur Verfügung gestellt. Dieser gewünschte, vom Standpunkt der Physik machbare, Schritt hängt im Wesentlichen davon ab, zu welchem Zeitpunkt FRAM-Speicher mit unterer Grenzspannung für die Abspeicherung, die unter 2 V liegen soll, auf dem Markt verfügbar sind. Dann nämlich verringert sich die Zahl der Spulenwindungen derart, dass eine Chipspule wirtschaftlich ist.

### BEZUGSZEICHENLISTE

- 10: Welle
- 12: Magnetträger
- 14: Rückschlusskörper
- 15: Platine
- 21: Ausgangsklemmen Spule
- 22: Ausgangsklemmen Spule
- 25: Ausgangsklemmen Hallsensor
- EM1: Erregermagnet
- EM2: Erregermagnet
- WE: Wiegand-Element
- FE: ferromagnetisches Element
- SP: Wiegand-Sensorspule
- SE: zusätzliches Sensorelement
- SV: Steuerlogik und Energieverwaltung
- ZD: Zähleinheit mit nichtflüchtigem Datenspeicher
- ZS: Zusatzsensor
- MC: µ-Controller bzw. Logik für Multiturnanordnung
- EL: Energiespeicher mit Ladeschaltung
- EC: Einchiplösung = End-IC
- N: Nordpol
- S: Südpol
- R1: Pfeil
- R2: Pfeil

## Patentansprüche

1. Absoluter feinauflösender Linearsegment- oder Umdrehungszähler umfassend die Elemente
- mindestens einen sich bewegenden Erregermagneten (EM1);
- ein Wiegand-Element (WE), bestehend aus einem ferromagnetischen Element (Wiegand-Draht, FE), das von einer Induktionsspule (SP) axial umschlossen ist;
- mindestens ein zusätzliches der Ermittlung der Polarität des Erregermagneten (EM1) dienendes Sensorelement (SE);
- eine Steuerlogik und Energieverwaltung (SV) für den Linearsegment- bzw. Umdrehungszähler;
- mindestens eine Zähleinheit mit nichtflüchtigem Datenspeicher (ZD); zur Ermittlung von Zählwerten und zur Eigenversorgung des zusätzlichen Sensorelements (SE), der Steuerlogik und Energieverwaltung (SV) und des nichtflüchtigen Datenspeichers (ZD), sowie
- einen Zusatzsensor (ZS) zur Feinauflösung der Segmente oder einer Umdrehung
- und einen µ-Controller bzw. eine Logik (MC)
für eine Multiturnanwendung,
wobei zumindest die Elemente
- Wiegand-Element (WE),
- zusätzliches Sensorelement (SE),
- Steuerlogik und Energieverwaltung (SV),
- Zähleinheit mit nichtflüchtigem Datenspeicher (ZD),
- Zusatzsensor (ZS),
- µ-Controller (MC)
zu einer Einchiplösung (EC) über mehrere sukzessive Integrationsschritte auf IC-Ebene zusammengefasst sind, wobei die sich aus den sukzessiven Integrationsschritten ergebenden Ziel-ICs technologische und wirtschaftlich eigenständige Lösungen darstellen und wobei bei der sukzessiven Integration der einzelnen Elemente die Elemente teils schon in Form eines ICs und teils direkt vorliegen.

2. Linearsegment- oder Umdrehungszähler nach Anspruch 1, **dadurch gekennzeichnet, dass** die Elemente zusätzliches Sensorelement (SE), Steuerlogik und Energieverwaltung(SV)und Zusatzsensor (ZS) zu einem Ziel-IC1 integriert sind.

3. Linearsegment- oder Umdrehungszähler nach den Ansprüchen 1 und 2, **dadurch gekennzeichnet, dass** dem Zähler mindestens ein Energiespeicher mit Ladeschaltung (EL) zugeordnet ist, wobei der Energiespeicher vorzugsweise mindestens einen Kondensator aufweist.

4. Linearsegment- oder Umdrehungszähler nach Anspruch 2, **dadurch gekennzeichnet, dass** der Ziel-IC1 mit dem Element Energiespeicher mit Ladeschaltung (EL) und dem Element Zähleinheit mit nichtflüchtigem Datenspeicher (ZD) zum Ziel-IC2 integriert ist.

5. Linearsegment- oder Umdrehungszähler nach Anspruch 4, **dadurch gekennzeichnet, dass** der Ziel-IC2 mit dem Element µ-Controller (MC) zum Ziel-IC3 integriert ist.

6. Linearsegment- oder Umdrehungszähler nach Anspruch 5, **dadurch gekennzeichnet, dass** der Ziel-IC3 mit dem Wiegand-Element (WE), zu einem End-IC als Einchiplösung integriert ist.

7. Linearsegment- oder Umdrehungszähler nach einem der vorstehenden Ansprüche, **dadurch gekennzeichnet, dass** über den Zusatzsensor (ZS) auch die Polarität des Erregermagneten (EM) feststellbar ist.

## Claims

1. Absolute fine resolving linear segment or revolution counter comprising the elements
- at least one moving excitation magnet (EM1);
- a Wiegand element (WE) consisting of a ferromagnetic element (Wiegand wire, FE) axially enclosed by an induction coil (SP);
- at least one additional sensor element (SE) serving for determining the polarity of the excitation magnet (EM1);
- a control logic and energy management (SV) for the linear segment or revolution counter;
- at least one counting unit with non-volatile data memory (ZD);
for determining counter values and for self-powering of the additional sensor element (SE), the control logic and energy management (SV) and the non-volatile data memory (ZD), and
- an additional sensor (ZS) for fine resolution of the segments or a revolution
- and a µ-controller or a logic (MC)
for a multiturn application,
wherein at least the elements
- Wiegand element (WE),
- Additional sensor element (SE),
- Control logic and energy management (SV),
- Counting unit with non-volatile data memory (ZD),
- Additional sensor (ZS),
- µ-controller (MC)
are combined into a single-chip solution over several successive integration steps at IC level, whereby the target ICs resulting from the successive integration steps represent technological and economically independent solutions and whereby during the successive integration of the individual elements the elements are already available partly in the form of an IC and partly directly.

2. Linear segment or revolution counter according to claim 1, **characterised in that** the elements additional sensor element (SE), control logic and energy management (SV), and additional sensor (ZS) are integrated into a target IC1.

3. Linear segment or revolution counter in accordance with claims 1 and 2, **characterized in that** at least one energy storage with charging circuit (EL) is assigned to the counter, the energy storage preferably having at least one capacitor.

4. Linear segment or revolution counter according to claim 2, **characterized in that** the target IC1 is integrated with the element energy storage with charging circuit (EL) and the element counting unit with non-volatile data memory (ZD) into the target IC2.

5. Linear segment or revolution counter according to claim 4, **characterized in that** the target IC2 is integrated with the element µ-controller (MC) into the target IC3.

6. Linear segment or revolution counter according to claim 5, **characterized in that** the target IC3 is integrated with the Wiegand element (WE) into an end IC as a single-chip solution.

7. Linear segment or revolution counter according to one of the above claims, **characterized in that** via the additional sensor (ZS) also the polarity of the excitation magnet (EM) is determinable.

## Revendications

1. Compteur absolu de segments linéaires ou de tours à résolution fine comprenant les éléments
- au moins un aimant d'excitation (EM1) mobile ;
- un élément de Wiegand (WE), se composant d'un élément ferromagnétique (fil de Wiegand, FE), qui est entouré axialement par une bobine d'induction (SP) ;
- au moins un élément capteur supplémentaire (SE) servant à la détermination de la polarité de l'aimant d'excitation (EM1) ;
- une logique de commande et une gestion d'énergie (SV) pour le compteur de segments linéaires ou de tours ;
- au moins une unité de comptage avec une mémoire de données non volatile (ZD) ;
pour la détermination de valeurs de comptage et pour l'alimentation propre de l'élément capteur supplémentaire (SE), de la logique de commande et de la gestion d'énergie (SV) et de la mémoire de données non volatile (ZD), ainsi que
- un capteur d'appoint (ZS) pour la résolution fine des segments ou d'un tour
- et un microcontrôleur ou une logique (MC) pour une application multitour,
dans lequel au moins les éléments
- élément de Wiegand (WE),
- élément capteur supplémentaire (SE),
- logique de commande et gestion d'énergie (SV),
- unité de comptage avec mémoire de données non volatile (ZD),
- capteur d'appoint (ZS),
- microcontrôleur (MC)
sont rassemblés sur un plan de CI en une solution monopuce (EC) par le biais de plusieurs étapes d'intégration successives, dans lequel les CI cibles résultant des étapes d'intégration successives représentent des solutions technologiques et économiquement autonomes et
dans lequel, lors de l'intégration successive des différents éléments, les éléments sont présents en partie déjà sous forme d'un CI et en partie directement.

2. Compteur de segments linéaires ou de tours selon la revendication 1, **caractérisé en ce que** les éléments, élément capteur supplémentaire (SE), logique de commande et gestion d'énergie (SV) et capteur d'appoint (ZS), sont intégrés pour former un CI1 cible.

3. Compteur de segments linéaires ou de tours selon les revendications 1 et 2, **caractérisé en ce qu'**au moins un accumulateur d'énergie avec un circuit de charge (EL) est associé au compteur, dans lequel l'accumulateur d'énergie présente de préférence au moins un condensateur.

4. Compteur de segments linéaires ou de tours selon la revendication 2, **caractérisé en ce que** le CI1 cible est intégré avec l'élément accumulateur d'énergie avec circuit de charge (EL) et l'élément unité de comptage avec mémoire de données non volatile (ZD) pour former le CI2 cible.

5. Compteur de segments linéaires ou de tours selon la revendication 4, **caractérisé en ce que** le CI2 cible est intégré avec l'élément microcontrôleur (MC) pour former le CI3 cible.

6. Compteur de segments linéaires ou de tours selon la revendication 5, **caractérisé en ce que** le CI3 cible est intégré avec l'élément de Wiegand (WE) pour former un CI final en tant que solution monopuce.

7. Compteur de segments linéaires ou de tours selon l'une quelconque des revendications précédentes, **caractérisé en ce que** la polarité de l'aimant d'excitation (EM) peut être également déterminée par le biais du capteur d'appoint (ZS).
